# EUROPEAN PATENT APPLICATION

(11) **EP 3 878 604 A1**
(43) Date of publication of application: **15.09.2021**
(21) Application number: 19881391.7
(22) Date of filing: 28.10.2019
(51) Int. Cl.: B25J 9/22, B25J 13/08, G06T 19/00

(54) **ROBOT CONTROL DEVICE, SIMULATION METHOD, AND SIMULATION PROGRAM**

(30) Priority: 09.11.2018 JP 2018211426
(71) Applicant: OMRON Corporation, Shiokoji-dori, Shimogyo-ku, Kyoto-shi Kyoto 600-8530 (JP)
(72) Inventor: HAYASHI, Kennosuke, Kizugawa-shi, Kyoto 619-0283 (JP); OKAWA, Yohei, Kizugawa-shi, Kyoto 619-0283 (JP)
(74) Representative: Becker, Eberhard
(86) International application number: PCT/JP2019/042084
(87) International publication number: WO 2020/095735

(57) **Abstract**

A robot control device 10 is provided with: a reading device 40 that reads a marker 21 attached to a robot 20 and markers 31 attached to individual objects 30; and a CPU 111 that performs image analysis concerning the individual positions of the robot 20 and the individual objects 30 in real space based on information read from the markers 21, 31, and that simulates the operation of the robot 20 while disposing three-dimensional shape models of the robot 20 and the individual objects 30 in a virtual space based on information indicating the positions of the robot 20 and the individual objects 30 in real space, information concerning the three-dimensional shape model of the robot 20, associated with the marker 21, and information concerning the three-dimensional shape models of the individual objects 30, associated with the individual markers 31.

## Description

### [Technical Field]

The invention relates to a robot control device, a simulation method, and a simulation program.

### [Background Art]

In factory automation, automatic production using robots has been widely used as a method for reducing running costs while improving producibility. Many robots used in production lines are designed to repeatedly perform specific operations (for example, transporting of components, assembly, welding, and the like) defined in advance in accordance with roles thereof, and such operations of the robots are called teaching playback. Since various objects are disposed around robots in production lines, it is desirable that operations of the robots based on teaching playback do not interfere with the objects. Here, objects is a term that collectively refers to objects (for example, operation tools, facilities, devices, and the like) disposed around the robots. As a method for performing such verification, a technique of simulating operations of the robots in virtual spaces is known as proposed by Patent Literature 1, for example.

### [Citation List]

### [Patent Literature]

[Patent Literature 1]
Japanese Laid-open No. 2002-331480

### [Summary of Invention]

### [Technical Problem]

In such simulation, it is necessary for an operator to dispose, through a manual operation, a three-dimensional shape model of a robot that is a target of operation verification and a three-dimensional shape model of each object disposed around the robot in a virtual space. At this time, a disadvantage that in a case in which the position or the posture of the three-dimensional shape model of the robot or an object in the virtual space does not conform to the position or the posture of the actual robot or the actual object in the real space, it is not possible to obtain correct simulation results may occur. Such inconsistency may occur in a case in which a change in position or posture of the robot or the object is not reflected in a simulation regardless of the change caused for certain reasons, for example. Also, a disadvantage that it is not possible to obtain a correct simulation result may occur in a case in which a scale of the three-dimensional shape model of the robot or the object does not conform to the size of the real robot or object.

Thus, an objective of the invention is to propose a robot control device, a simulation method, and a simulation program capable of curbing such inconsistencies and improving accuracy of operation simulation of a robot.

### [Solution to Problem]

In order to solve the aforementioned problem, a robot control device according to the invention includes: a reading device that reads a first marker attached to a robot and associated with information of a three-dimensional shape model of the robot, and one or more second markers attached to one or more objects disposed around the robot, each of the one or more second markers being associated with information of a three-dimensional shape model of a corresponding object; an analysis unit that performs image analysis concerning respective positions of the robot and the one or more objects in a real space based on information read from the first marker and the one or more second markers by the reading device; and a simulation unit that simulates an operation of the robot while disposing the respective three-dimensional shape models of the robot and the one or more objects in a virtual space based on information indicating the respective positions of the robot and the one or more objects in the real space and analyzed by the analysis unit, information of the three-dimensional shape model of the robot associated with the first marker, and information of the three-dimensional shape models of the respective one or more objects respectively associated with the one or more second markers.

With such a configuration, it is possible to automatically cause the positions and the postures of the three-dimensional shape models of the robot and the one or more objects disposed around the robot in a virtual space to conform to the positions and the postures of the robot and the one or more objects in the real space. In a case in which the position or the posture of the robot or any of the objects have changed for certain reasons, for example, it is possible to appropriately reflect the changes in the simulation.

The robot control device according to the invention may further include: a display unit that displays the three-dimensional shape model of the robot and the three-dimensional shape models of the respective one or more objects disposed in the virtual space; and a correction unit that corrects a scale of the three-dimensional shape model of the robot or the three-dimensional shape models of the respective one or more objects in response to a correction instruction from an operator.

With such a configuration, it is possible to perform correction such that the scale of the three-dimensional shape model of the robot conforms to the size of the real robot. Similarly, it is possible to perform correction such that the scale of the three-dimensional shape models of the objects conforms to the sizes of the real objects.

One of augmented reality goggles, mixed reality goggles, and virtual reality goggles wirelessly connected to the robot control device may serve as the display unit. The operator can thus input a scale correction instruction for the three-dimensional shape model of the robot or the three-dimensional shape models of the one or more objects inside or in the vicinity of the real space where the robot and the one or more objects are disposed without experiencing inconvenience due to wiring.

The robot control device according to the invention may further include: a control unit that controls the operation of the robot such that the robot performs a predefined operation in response to designation of the second markers from the operator. It is thus possible to control the operation of the robot through designation of the second markers.

A robot control device according to the invention includes: a reading device that reads first identification information associated with information of a three-dimensional shape model of a robot from a first radio tag attached to the robot and one or more second identification information associated with information of a three-dimensional shape model of a corresponding object from one or more second radio tags attached to one or more objects disposed around the robot; an analysis unit that analyzes respective positions of the robot and the one or more objects in a real space based on information read from the first identification information and the one or more second identification information by the reading device; and a simulation unit that simulates an operation of the robot while disposing the respective three-dimensional shape models of the robot and the one or more objects in a virtual space based on information indicating the respective positions of the robot and the one or more objects in the real space and analyzed by the analysis unit, information of the three-dimensional shape model of the robot associated with the first identification information, and information of the three-dimensional shape models of the respective one or more objects respectively associated with the one or more second identification information.

With such a configuration, it is possible to automatically cause the positions and the postures of the three-dimensional shape models of the robot and the one or more objects disposed around the robot in the virtual space to conform to the positions and the postures of the robot and the one or more objects in the real space. In a case in which the position or the posture of the robot or any of the objects have been changed for certain reasons, for example, it is possible to appropriately reflect the change in the simulation.

The robot control device according to the invention may further include: a display unit that displays the three-dimensional shape model of the robot and the three-dimensional shape models of the respective one or more objects disposed in the virtual space; and a correction unit that corrects a scale of the three-dimensional shape model of the robot or the three-dimensional shape models of the respective one or more objects in response to a correction instruction from an operator.

With such a configuration, it is possible to perform correction such that a scale of the three-dimensional shape model of the robot conforms to the size of the real robot. Similarly, it is possible to perform correction such that the scale of the three-dimensional shape models of the object conforms to the sizes of the real objects.

One of augmented reality goggles, mixed reality goggles, and virtual reality goggles wirelessly connected to the robot control device may serve as the display unit. The operator can thus input a scale correction instruction for the three-dimensional shape model of the robot or the three-dimensional shape models of the one or more objects inside or in the vicinity of the real space where the robot and the one or more objects are disposed without experiencing inconvenience due to wiring.

The robot control device according to the invention may further include: a control unit that controls the operation of the robot such that the robot performs a predefined operation in response to designation of the second markers from the operator. It is thus possible to control the operation of the robot through designation of the second markers.

A simulation method according to the invention causes a computer system to execute: reading a first marker attached to a robot and associated with information of a three-dimensional shape model of the robot and one or more second markers attached to one or more objects disposed around the robot, each of the one or more second markers being associated with information of a three-dimensional shape model of a corresponding object; performing image analysis concerning respective positions of the robot and the one or more objects in a real space based on information read from the first marker and the one or more second markers; and simulating an operation of the robot while disposing the respective three-dimensional shape models of the robot and the one or more objects in a virtual space based on information indicating the respective positions of the robot and the one or more objects in the real space, information of the three-dimensional shape model of the robot associated with the first marker, and information of the three-dimensional shape models of the respective one or more objects respectively is associated with the one or more second markers.

According to such a simulation method, it is possible to automatically cause the positions and the postures of the three-dimensional shape models of the robot and the one or more objects disposed around the robot in the virtual space to conform to the positions and the postures of the robot and the one or more objects in the real space. In a case in which the position or the posture of the robot or any of the objects have been changed for certain reasons, for example, it is possible to appropriately reflect the change in the simulation.

A simulation method according to the invention causes a computer system to execute: reading first identification information associated with information of a three-dimensional shape model of a robot from a first radio tag attached to the robot and one or more second identification information associated with information of a three-dimensional shape model of a corresponding object from one or more second radio tags attached to one or more objects disposed around the robot; analyzing respective positions of the robot and the one or more objects in a real space based on information read from the first identification information and the one or more second identification information; and simulating an operation of the robot while disposing the respective three-dimensional shape models of the robot and the one or more objects in a virtual space based on information indicating the respective positions of the robot and the one or more objects in the real space, information of the three-dimensional shape model of the robot associated with the first identification information, and information of the three-dimensional shape models of the respective one or more objects respectively associated with the one or more second identification information.

According to such a simulation method, it is possible to automatically cause the positions and the postures of the three-dimensional shape models of the robot and the one or more objects disposed around the robot in the virtual space to conform to the positions and the postures of the robot and the one or more objects in the real space. In a case in which the position or the posture of the robot or any of the objects have been changed for certain reasons, for example, it is possible to appropriately reflect the change to the simulation.

A simulation program according to the invention causes a computer system to execute: reading a first marker attached to a robot and associated with information of a three-dimensional shape model of the robot and one or more second markers attached to one or more objects disposed around the robot, each of the one or more second markers being associated with information of a three-dimensional shape model of a corresponding object; performing image analysis concerning respective positions of the robot and the one or more objects in a real space based on information read from the first marker and the one or more second markers; and simulating an operation of the robot while disposing the respective three-dimensional shape models of the robot and the one or more objects in a virtual space based on information indicating the respective positions of the robot and the one or more objects in the real space, information of the three-dimensional shape model of the robot associated with the first marker, and information of the three-dimensional shape models of the respective one or more objects respectively associated with the one or more second markers.

According to such a simulation program, it is possible to automatically cause the positions and the postures of the three-dimensional shape models of the robot and the one or more objects disposed around the robot in the virtual space to conform to the positions and the postures of the robot and the one or more objects in the real space. In a case in which the position or the posture of the robot or any of the objects have been changed for certain reasons, for example, it is possible to appropriately reflect the change to the simulation.

A simulation program according to the invention causes a computer system a computer system to execute: reading first identification information associated with information of a three-dimensional shape model of a robot from a first radio tag attached to the robot and one or more second identification information associated with information of a three-dimensional shape model of a corresponding object from one or more second radio tags attached to one or more objects disposed around the robot; analyzing respective positions of the robot and the one or more objects in a real space based on information read from the first identification information and the one or more second identification information; and simulating an operation of the robot while disposing the respective three-dimensional shape models of the robot and the one or more objects in a virtual space based on information indicating the respective positions of the robot and the one or more objects in the real space, information of the three-dimensional shape model of the robot associated with the first identification information, and information of the three-dimensional shape models of the respective one or more objects respectively associated with the one or more second identification information.

According to such a simulation program, it is possible to automatically cause the positions and the postures of the three-dimensional shape models of the robot and the one or more objects disposed around the robot in the virtual space to conform to the positions and the postures of the robot and the one or more objects in the real space. In a case in which the position or the posture of the robot or any of the objects have been changed for certain reasons, for example, it is possible to appropriately reflect the change in the simulation.

### [Advantageous Effects of Invention]

According to the invention, it is possible to improve accuracy of operation simulation of a robot.

### [Brief Description of Drawings]

Fig. 1 is an explanatory diagram of a robot control device according to an embodiment.
Fig. 2 is an explanatory diagram illustrating an example of a first hardware configuration of the robot control device according to the embodiment.
Fig. 3 is a block diagram illustrating an example of functions of the robot control device according to the embodiment.
Fig. 4 is an explanatory diagram illustrating an example of a marker according to the embodiment.
Fig. 5 is a flowchart illustrating an example of a flow of processing in a simulation method according to the embodiment.
Fig. 6 is an explanatory diagram illustrating an example of a second hardware configuration of the robot control device according to the embodiment.
Fig. 7 is a flowchart illustrating an example of a flow of processing in the simulation method according to the embodiment.

### [Description of Embodiments]

Hereinafter, an embodiment according to an aspect of the invention will be described based on the drawings. The embodiment of the invention is for facilitating understanding of the invention and is not to be interpreted as limiting the invention. The invention can be modified or improved without departing from the gist thereof, and the invention includes equivalents thereof. Note that the same reference signs are assumed to indicate the same components, and repeated description thereof will be omitted.

### [Application examples]

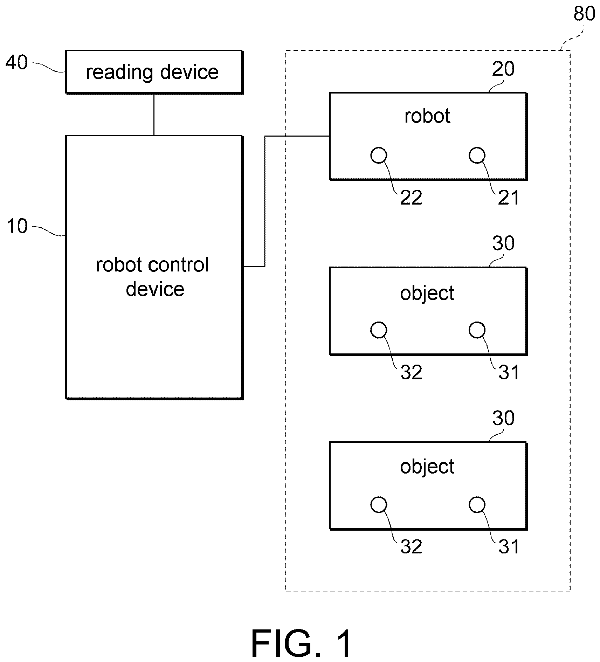

First, application examples of the invention will be described with reference to Fig. 1. A robot control device 10 according to the embodiment is a computer system that has a function of simulating operations of a robot 20 in a virtual space and a function of controlling operations of the robot 20 in a real space 80. Here, the real space is a concept that is comparable with the virtual space and has the same meaning as a work space. As specific examples of the robot 20, it is possible to exemplify a vertical articulated robot, a horizontal articulated robot, an orthogonal robot, or a parallel link robot. The robot 20 operates as a manipulator that autonomously operates and can be used for purposes, such as assembly, transport, coating, inspection, polishing, or washing of components, for example.

One or more objects 30 are disposed around the robot 20 in the real space 80. The objects 30 are objects disposed around the robot 20, and specific examples thereof include a work table, a work box, and a work mat, for example. A marker 21 that holds identification information of the robot 20 is attached to the robot 20. The position of the marker 21 in the robot 20 is assumed to be known. The marker 21 is associated with information of a three-dimensional shape model of the robot 20 in advance. A marker 31 that holds identification information of the object 30 is attached to each object 30. The position of the marker 31 in each object 30 is assumed to be known. The marker 31 is associated with information of a three-dimensional shape model of the object 30 in advance.

Here, the three-dimensional shape model is, for example, a computer-aided design (CAD) model, and the information of the three-dimensional shape model includes model information related to the model shape and the model size. The robot control device 10 stores in advance the information of the respective three-dimensional shape models of the robot 20 and the one or more objects 30 disposed around the robot 20. Note that two-dimensional codes called quick response (QR) codes or augmented reality (AR) codes may be used as the markers 21 and 31, for example.

The robot control device 10 includes a reading device 40 that performs image recognition of the respective positions and postures of the robot 20 and the one or more objects 30 disposed around the robot 20 in a real space 80 to read the marker 21 and the one or more markers 31. As an example of the reading device 40, an imaging device such as a camera, for example, can be exemplified. The robot control device 10 performs image analysis concerning the respective positions and postures of the robot 20 and the one or more objects 30 in the real space 80 based on information read from the marker 21 and the one or more markers 31 by the reading device 40.

The robot control device 10 simulates the operation of the robot 20 while disposing the respective three-dimensional shape models of the robot 20 and the one or more objects 30 in a virtual space based on information indicating the respective positions and postures of the robot 20 and the one or more objects 30 in the real space 80, information of the three-dimensional shape model of the robot 20 associated with the marker 21, and information of the three-dimensional shape models of the respective one or more objects 30 respectively associated with the one or more markers 31. In a case in which it is determined that there is no concern that the robot 20 will interfere with the objects 30 in the surroundings thereof as a result of the simulation, the robot control device 10 controls operations of the robot 20 in the real space 80. On the other hand, if it is determined that there is a concern that the robot 20 will interfere with some of the objects 30 in the surroundings thereof as a result of the simulation, a location where either the objects 30 or the robot 20 or both the objects 30 and the robot 20 are installed may be changed in the real space 80, or an operation range of the robot 20 may be limited to prevent the interference from occurring.

According to such a method, it is possible to automatically cause the positions and the postures of the respective three-dimensional shape models of the robot 20 and the one or more objects 30 disposed in the surroundings thereof in the virtual space to conform to the positions and the postures of the robot 20 and the one or more objects 30 in the real space 80. In a case in which the position or the posture of the robot 20 or some of the objects 30 has been changed for certain reasons, for example, it is possible to appropriately reflect the change in the simulation.

Note that the marker 21 may be attached to the robot 20 in advance at the time of shipping of the robot 20, or the user may attach the marker 21 to the robot 20 after the shipping of the robot 20. Similarly, the markers 31 may be attached to the objects 30 at the time of shipping of the objects 30, or the user may attach the markers 31 to the objects 30 after the shipping of the objects 30.

A radio tag 22 instead of the marker 21 may be attached to the robot 20. The radio tag 22 includes a semiconductor memory from which identification information associated with information of the three-dimensional shape model of the robot 20 can be read through a radio signal. Similarly, radio tags 32 instead of the markers 31 may be attached to each of the objects 30. The radio tags 32 include semiconductor memories from which identification information associated with information of the three-dimensional shape models of the objects 30 can be read through radio signals. In this case, it is possible to use a tag reader instead of the imaging device such as a camera as the reading device 40. The reading device 40 reads the identification information associated with the information of the three-dimensional shape model of the robot 20 from the radio tag 22. The robot control device 10 analyzes the position of the robot 20 in the real space 80 based on phase information of the radio signal received from the radio tag 22. The reading device 40 reads the identification information associated with the information of the three-dimensional shape models of the objects 30 from the radio tags 32. The robot control device 10 analyzes the positions of the objects 30 in the real space 80 based on phase information of the radio signals received from the radio tags 32.

The robot control device 10 simulates the operation of the robot 20 while disposing the respective three-dimensional shape models of the robot 20 and the one or more objects 30 in the virtual space based on the information indicating the respective positions of the robot 20 and the one or more objects 30 in the real space 80, the information of the three-dimensional shape model of the robot 20 associated with the identification information read from the radio tag 22, and the information of the three-dimensional shape models of the one or more objects 30 respectively associated with the identification information read from the one or more radio tags 32.

In this manner, even in the case in which the radio tags 22 and 32 are used instead of the markers 21 and 31, it is possible to automatically cause the positions of the respective three-dimensional shape models of the robot 20 and the one or more objects 30 disposed in the surroundings thereof in the virtual space to conform to the positions of the robot 20 and the one or more objects 30 in the real space 80.

Note that the radio tag 22 may be attached to the robot 20 in advance at the time of shipping of the robot 20, or the user may attach the radio tag 22 to the robot 20 after the shipping of the robot 20. Similarly, the radio tags 23 may be attached to the objects 30 at the time of shipping of the objects 30, or the user may attach the radio tags 23 to the objects 30 after the shipping of the objects 30.

Although both the marker 21 and the radio tag 22 are attached to the robot 20 in the example illustrated in Fig. 1 for convenience of explanation, it is only necessary for either the marker 21 or the radio tag 22 to be attached to the robot 20. Similarly, although both the markers 31 and the radio tags 32 are attached to the objects 30, it is only necessary for either the markers 31 or the radio tags 32 to be attached to the objects 30.

### [First hardware configuration]

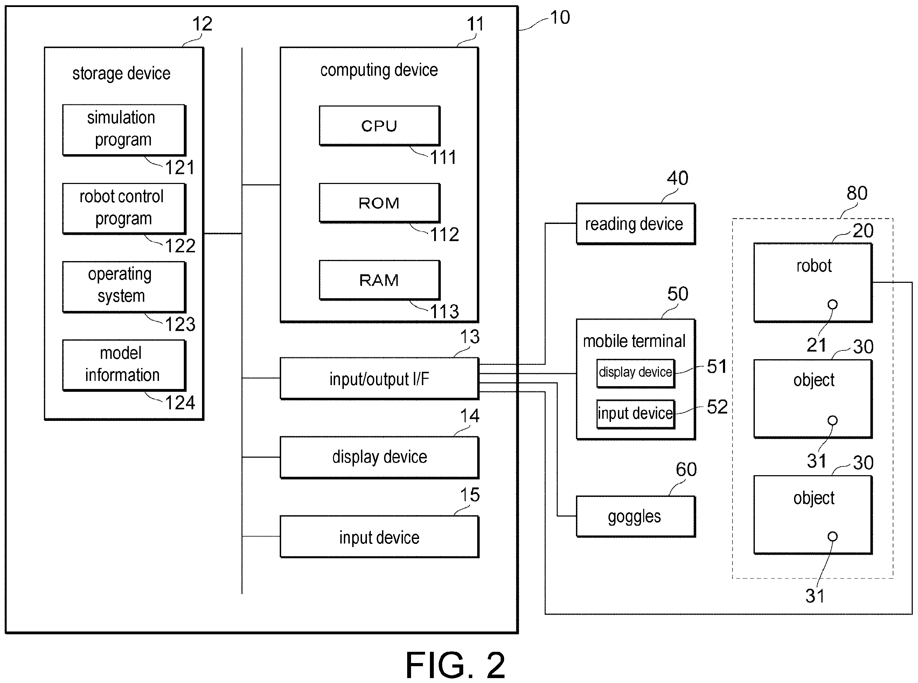

Next, an example of a first hardware configuration of the robot control device 10 will be described with reference to Fig. 2.

The robot control device 10 includes, as hardware resources, a computing device 11, a storage device 12, an input/output interface 13, a display device 14, an input device 15, and a reading device 40. The computing device 11 includes, a central processing unit (CPU) 111, a read only memory (ROM) 112, and a random access memory (RAM) 113. The storage device 12 is a computer-readable recording medium such as a disk medium (for example, a magnetic recording medium or a magneto-optical recording medium) or a semiconductor memory (for example, a volatile memory or a non-volatile memory). Such a recording medium can also be referred to as, for example, a non-transitory recording medium. The storage device 12 stores a simulation program 121 for simulating operations of the robot 20 in the virtual space, a robot control program 122 for controlling the operations of the robot 20 in the real space 80, an operating system 123, and information (model information) 124 of the respective three-dimensional shape models of the robot 20 and the one or more objects 30. The various software programs (for example, the simulation program 121, the robot control program 122, and the operating system 123) are respectively read from the storage device 12 to the RAM 113 and is then interpreted and executed by the CPU 111. The input/output interface 13 is connected to the reading device 40 and the robot 20. The display device 14 displays, on a screen, how the respective three-dimensional shape models of the robot 20 and the one or more objects 30 disposed in the surroundings thereof are disposed in the virtual space and displays, on a screen, how the operations of the robot 20 are simulated in the virtual space. The display device 14 is, for example, a flat display such as a liquid crystal display, an electroluminescent display, or a plasma display. The input device 15 is a device for allowing the operator to input various kinds of setting information such as setting for the simulation and setting for the operations of the robot 20. The input device 15 is, for example, a keyboard, a mouse, or a touch screen. Note that description of a mobile terminal 50 and goggles 60 will be provided later.

### [First functional configuration]

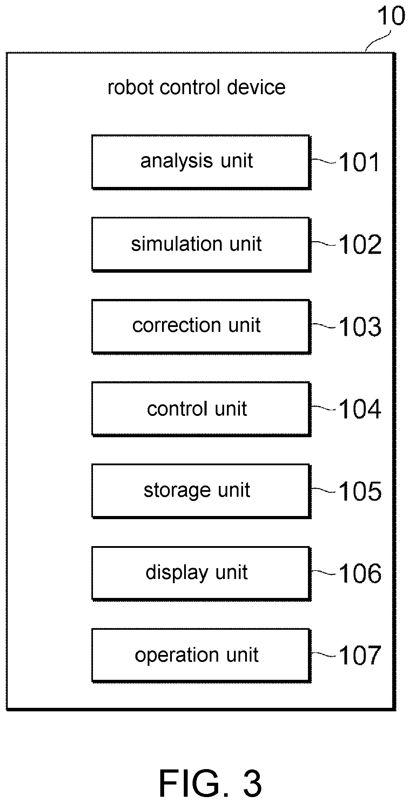

Fig. 3 is a block diagram illustrating an example of functions of the robot control device 10. In cooperation of the hardware resources of the robot control device 10 and the various software programs (for example, the simulation program 121, the robot control program 122, and the operating system 123), functions of an analysis unit 101, a simulation unit 102, a correction unit 103, a control unit 104, a storage unit 105, a display unit 106, and an operation unit 107 are realized. In particular, the functions of the analysis unit 101, the simulation unit 102, and the correction unit 103 are realized through cooperation of the simulation program 121 and the CPU 111. The functions of the control unit 104 are realized through cooperation of the robot control program 122 and the CPU 111. The functions of the storage unit 105 are realized through cooperation of the operating system 123 and the storage device 12. The functions of the display unit 106 are realized through cooperation of the operating system 123 and the display device 14. The functions of the operation unit 107 are realized through cooperation of the operating system 123 and the input device 15.

The storage unit 105 stores the model information 124. The analysis unit 101 performs image analysis concerning the respective positions and postures of the robot 20 and the one or more objects 30 in the real space 80 based on the information read from the marker 21 and the one or more markers 31 by the reading device 40. The simulation unit 102 simulates the operation of the robot 20 while disposing the respective three-dimensional shape models of the robot 20 and the one or more objects 30 in the virtual space based on the information indicating the respective positions and postures of the robot 20 and the one or more objects 30 in the real space 80, the model information 124 of the robot 20 associated with the marker 21, and the model information 124 of the one or more objects 30 respectively associated with the one or more markers 31. The display unit 106 displays, on the screen, the three-dimensional shape model of the robot 20 and the three-dimensional shape models of the one or more objects 30 disposed in the virtual space.

The scale of the three-dimensional shape model of the robot 20 or the objects 30 may not conform to the size of the real robot 20 or the real objects 30. In such a case, the operator compares the three-dimensional shape models of the robot 20 and the one or more objects 30 displayed on the display unitl06 with the real robot 20 and the one or more real objects 30. In a case in which the scale of the three-dimensional shape model of the robot 20 does not conform to the size of the real robot 20, the operator inputs a correction instruction for correcting the scale of the three-dimensional shape model of the robot 20 through an operation of the operation unit 107. The correction unit 103 performs correction such that the scale of the three-dimensional shape model of the robot 20 conforms to the size of the real robot 20 in response to the correction instruction from the operator. Similarly, in a case in which a scale of the three-dimensional shape model of some of the objects 30 does not conform to the size of the real object 30, the operator inputs a correction instruction for correcting the scale of the three-dimensional shape model of the object 30 through an operation of the operation unit 107. The correction unit 103 performs correction such that the scale of the three-dimensional shape model of the object 30 conforms to the size of the real object 30 in response to the correction instruction from the operator.

In a case in which a plurality of markers 21 are attached to the robot 20, and the distance between the markers 21 is known, the correction unit 103 may perform automatic correction such that the scale of the three-dimensional shape model of the robot 20 conforms to the size of the real robot 20. Similarly, in a case in which a plurality of markers 31 are attached to the object 30, and the distance between the markers 31 is known, the correction unit 103 may perform automatic correction such that the scale of the three-dimensional shape model of the object 30 conforms to the size of the real object 30.

Note that the device that serves as the display unit 106 is not limited to the display device 14, and in a case in which the mobile terminal 50 is connected to the input/output interface 13, for example, a display device 51 of the mobile terminal 50 may serve as the display unit 106. At this time, an input device 52 of the mobile terminal 50 may serve as the operation unit 107. The operator can compare the three-dimensional shape models of the robot 20 and the one or more objects 30 displayed on the display device 51 of the mobile terminal 50 with the real robot 20 and the one or more real objects 30 and input a scale correction instruction for the three-dimensional shape model of the robot 20 or the object 30 through an operation of the input device 52 of the mobile terminal 50. The mobile terminal 50 is, for example, a mobile communication terminal called a smartphone, a smartwatch, or a tablet terminal or a personal computer provided with a communication function.

Also, in a case in which the goggles 60 are connected to the input/output interface 13, the goggles 60 may serve as the display unit 106. Here, the goggles 60 are, for example, augmented reality goggles, mixed reality goggles, or virtual reality goggles. The operator can compare the three-dimensional shape models of the robot 20 and the one or more objects 30 displayed on the goggles 60 with the real robot 20 and the one or more real objects 30 and input a scale correction instruction for the three-dimensional shape model of the robot 20 or the objects 30 through an operation of the operation unit 107. The goggles 60 may be wirelessly connected to the input/output interface 13 through a near-field wireless communication (for example, Wi-Fi), for example. In this manner, the operator can input the aforementioned scale correction instruction inside or in the vicinity of the real space 80 without experiencing in inconvenience due to wiring.

In a case in which it is determined that there is no concern that the robot 20 interferes with the objects 30 in the surroundings thereof as a result of the simulation, the control unit 104 controls the operations of the robot 20 in the real space 80. The control of the operations of the robot 20 may be based on teaching playback, for example. In such teaching playback, the control may be performed such that the robot 20 performs a predefined operation in response to designation of the markers 31, for example. In a case in which each of the two objects 30 is a work box in the example illustrated in Fig. 2, for example, it is possible to provide an instruction for performing an operation of taking a workpiece out of one of the work boxes and putting the workpiece in the other work box to the robot 20 through the designation of the markers 31 attached to the respective work boxes. Such an instruction can be provided through an operation performed by the operator on the operation unit 107, for example. Note that the workpiece means, for example, a workpiece in progress or a component.

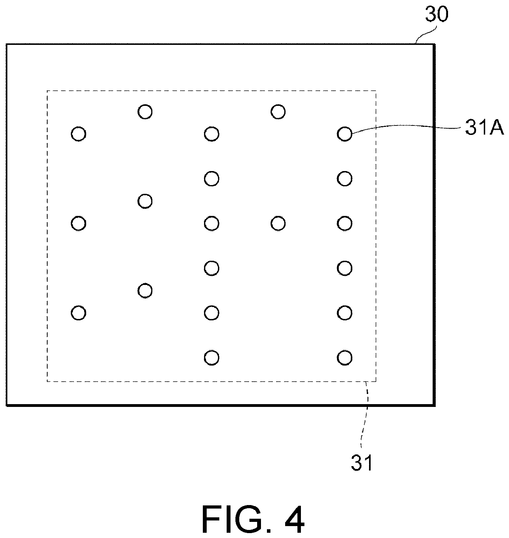

Fig. 4 is an explanatory diagram illustrating an example of the marker 31 according to the embodiment. The object 30 is, for example, a work mat for the robot 20, and the robot 20 can perform an operation of causing a workpiece placed on the work mat to move, for example. A plurality of points 31A are randomly provided on the surface of the work mat. How the plurality of points 31a are aligned and the distance between two adjacent points 31A are assumed to be known. Since how the plurality of randomly provided points 31A are aligned is not similar when seen from any direction with respect to the surface of the work mat, it is possible to specify the orientation of the work mat and the position of the workpiece placed on the work mat by the reading device 40 pattern-recognizing how the plurality of points 31A are aligned. Such a group of a plurality of points 31A can serve as a marker 31 that holds identification information of the work mat as a whole. The marker 31 of the work mat is associated with information of the three-dimensional shape model of the work mat in advance. Note that a part of the plurality of points 31A may have a color different from that of the other points, and the orientation of the work mat and the position of the workpiece placed on the work mat may be specified through pattern recognition in consideration of the colors in addition to how the points 31A are aligned.

In another example of the marker 31 attached to the object 30, a group of a plurality of light emitting elements may be used. It is possible to read identification information of the object 30 from a light emitting pattern of the plurality of light emitting elements configuring the marker 31 through one-to-one correspondence between the light emitting pattern of the plurality of light emitting elements configuring the marker 31 and the identification information of the object 30. The identification information is associated with the information of the three-dimensional shape model of the object 30 in advance. Note that the light emitting pattern means a combination of a turning-on pattern indicating a timing of turning-on or turning-off of each light emitting element and a turning-on color of each light emitting element. As the light emitting element, a light emitting diode can be used, for example.

Similarly, a group of a plurality of light emitting elements may be used in another example of the marker 21 attached to the robot 20. It is possible to read identification information of the robot 20 from a light emitting pattern of the plurality of light emitting elements configuring the marker 21 through one-to-one correspondence between the light emitting pattern of the plurality of light emitting elements configuring the marker 21 and the identification information of the robot 20. The identification information is associated with the information of the three-dimensional shape model of the robot 20 in advance.

### [First simulation method]

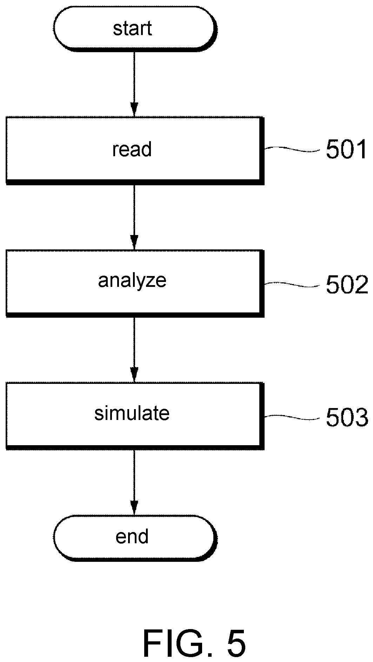

Fig. 5 is a flowchart illustrating an example of a flow of processing in the simulation method performed by the robot control device 10 with the first hardware configuration. The processing is executed through control of the hardware resources of the robot control device 10 using the simulation program 121.

In Step 501, the robot control device 10 reads the marker 21 attached to the robot 20 and reads the one or more markers 22 attached to one or more objects 30 disposed around the robot 20.

In Step 502, the robot control device 10 performs image analysis concerning the respective positions of the robot 20 and the one or more objects 30 in the real space 80 based on the information read from the marker 21 and the one or more markers 22.

In Step 503, the robot control device 10 simulates the operation of the robot 20 while disposing the respective three-dimensional shape models of the robot 20 and the one or more objects 30 in the virtual space based on information indicating the respective positions of the robot 20 and the one or more objects 30 in the real space 80, the model information 124 of the robot associated with the marker 21, and the model information 124 of the one or more objects 30 associated respectively with the one or more markers 22.

### [Second hardware configuration]

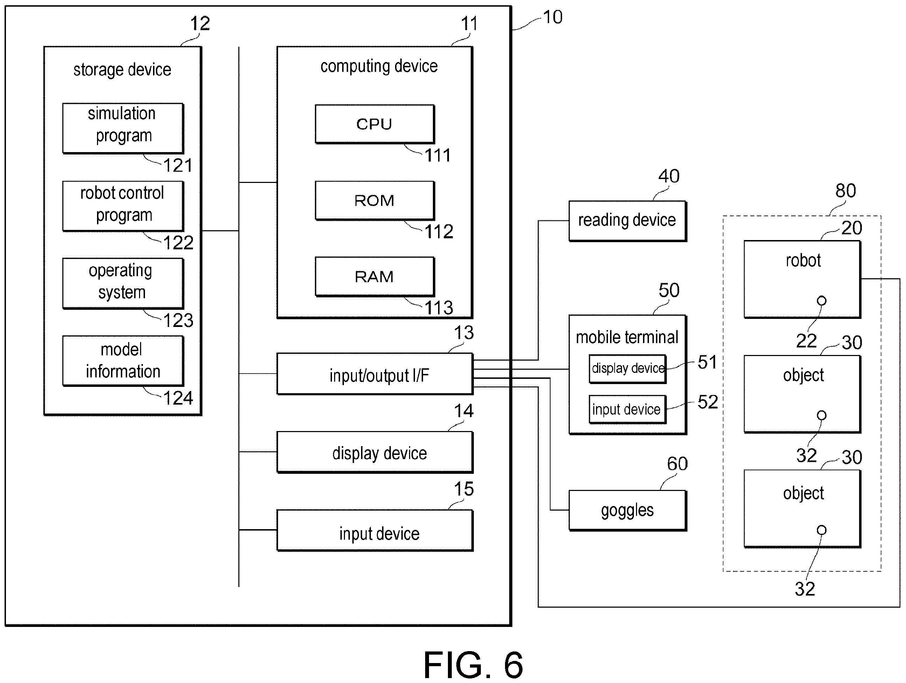

Next, an example of a second hardware configuration of the robot control device 10 will be described with reference to Fig. 6.

As illustrated in Fig. 6, a radio tag 22 instead of the marker 21 is attached to the robot 20. Similarly, the radio tag 32 instead of the marker 31 is attached to each object 30. As the reading device 40, a tag reader instead of the imaging device such as a camera is used. The reading device 40 reads, from the radio tag 22, identification information associated with the information of the three-dimensional shape model of the robot 20 and reads, from the radio tag 32, identification information associated with the information of the three-dimensional shape model of the object 30. Since the other parts of the second hardware configuration are similar to the first hardware configuration, repeated description will be omitted.

### [Second functional configuration]

Since the functional block diagram of the robot control device 10 with the second hardware configuration is the same as the block diagram in Fig. 3, each function of the robot control device 10 with the second hardware configuration will be described with reference to Fig. 3.

The analysis unit 101 analyzes the position of the robot 20 in the real space 80 based on phase information of a radio signal received from the radio tag 22. In a case in which three radio tags 22 are attached to the robot 20, the analysis unit 101 can also analyze the posture of the robot 20 in addition to the position thereof in the real space 80. The analysis unit 101 analyzes the position of the object 30 in the real space 80 based on phase information of a radio signal received from the radio tag 32. In a case in which three radio tags 32 are attached to the object 30, the analysis unit 101 can also analyze the posture of the object 30 in addition to the position thereof in the real space 80. The simulation unit 102 simulates operations of the robot 20 while disposing the respective three-dimensional shape models of the robot 20 and the one or more objects 30 in the virtual space based on information indicating the respective positions (or the positions and the postures) of the robot 20 and the one or more objects 30 in the real space 80, the model information 124 of the robot 20 associated with the identification information read from the radio tag 22, and the model information 124 of the one or more objects 30 respectively associated with the identification information read from the one or more radio tags 32. Note that the functions of the correction unit 103, the control unit 104, the storage unit 105, the display unit 106, and the operation unit 107 in the second hardware configuration are similar to the functions of the correction unit 103, the control unit 104, the storage unit 105, the display unit 106, and the operation unit 107 in the first hardware configuration.

In a case in which it is determined that there is no concern that the robot 20 interferes with the objects 30 in the surroundings thereof as a result of the simulation, the control unit 104 controls operations of the robot 20 in the real space 80. The control of the operations of the robot 20 may be based on teaching playback, for example. In such teaching playback, control may be performed such that the robot 20 performs a predefined operation in response to designation of the radio tags 32, for example. In a case in which each of the two objects 30 is a work box in the example illustrated in Fig. 6, for example, it is possible to provide an instruction for performing an operation of taking a workpiece out of one of the work boxes and putting the workpiece in the other work box to the robot 20 through designation of the radio tags 32 attached to the respective work boxes. Such an instruction can be provided through an operation performed by the operator on the operation unit 107, for example.

### [Second simulation method]

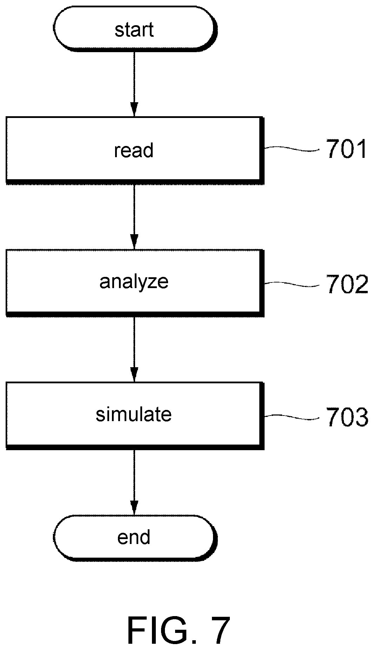

Fig. 7 is a flowchart illustrating an example of a flow of processing in the simulation method performed by the robot control device 10 with the second hardware configuration. The processing is executed through control of the hardware resources of the robot control device 10 using the simulation program 121.

In Step 701, the robot control device 10 reads, from the radio tag 22, identification information associated with the information of the three-dimensional shape model of the robot 20 and reads, from the radio tags 32, identification information associated with the information of the three-dimensional shape models of the objects 30.

In Step 702, the robot control device 10 analyzes the position of the robot 20 in the real space 80 based on phase information of a radio signal received from the radio tag 22 and analyzes the positions of the objects 30 in the real space 80 based on the phase information of radio signals received from the radio tags 32.

In Step 703, the robot control device 10 simulates operations of the robot 20 while disposing the three-dimensional shape models of the robot 20 and the one or more objects 30 in the virtual space based on information indicating the respective positions of the robot 20 and the one or more objects 30 in the real space 80, the model information 124 of the robot 20 associated with the identification information read from the radio tag 22, and the model information 124 of the one or more objects 30 respectively associated with the identification information read from the one or more radio tags 32.

Note each of the functions (the analysis unit 101, the simulation unit 102, the correction unit 103, the control unit 104, the storage unit 105, the display unit 106, and the operation unit 107) of the robot control device 10 is not necessarily realized through cooperation of the hardware resources of the robot control device 10 and the various software programs (for example, the simulation program 121, the robot control program 122, and the operating system 123) and may be realized using a hardware resource (for example, an application specific integrated circuit (ASIC) or a field programmable gate array (FPGA)) dedicated for the robot control device 10, for example.

The robot 20 according to the embodiment is not limited to an industrial robot used for factory automation and may be, for example, a robot used for a service industry (for example, an operating robot, a medical robot, a cleaning robot, a rescue robot, or a security robot).

Although a part or an entirety of the aforementioned embodiment can be described as the following appendixes, the invention is not limited to the following appendixes.

### (Appendix 1)

A robot control device 10 including: a reading device 40 that reads a first marker 21 attached to a robot 20 and associated with information of a three-dimensional shape model of the robot 20 and one or more second markers 31 attached to one or more objects 30 disposed around the robot 20, each of one or more second markers 31 being associated with information of a three-dimensional shape model of a corresponding object 30; an analysis unit 101 that performs image analysis concerning respective positions of the robot 20 and the one or more objects 30 in a real space 80 based on information read from the first marker 21 and the one or more second markers 31 by the reading device 40; and a simulation unit 102 that simulates an operation of the robot 20 while disposing the respective three-dimensional shape models of the robot 20 and the one or more objects 30 in a virtual space 80 based on information indicating the respective positions of the robot 20 and the one or more objects 30 in the real space 80 and analyzed by the analysis unit 101, information of the three-dimensional shape model of the robot 20 associated with the first marker 21, and information of the three-dimensional shape models of the respective one or more objects 30 respectively associated with each of the one or more second markers 31.

### (Appendix 2)

The robot control device 10 according to Appendix 1, further including: a display unit 106 that displays the three-dimensional shape model of the robot 20 and the three-dimensional shape models of the respective one or more objects 30 disposed in the virtual space 80; and a correction unit 103 that corrects a scale of the three-dimensional shape model of the robot 20 or the three-dimensional shape models of the respective one or more objects 30 in response to a correction instruction from an operator.

### (Appendix 3)

The robot control device 10 according to Appendix 1 or 2, in which one of augmented reality goggles 60, mixed reality goggles 60, and virtual reality goggles 60 wirelessly connected to the robot control device 101 serves as the display unit 106.

### (Appendix 4)

The robot control device 10 according to any one of Appendixes 1 to 3, further including: a control unit 104 that controls the operation of the robot 20 such that the robot 20 performs a predefined operation in response to designation of the second markers 31 from the operator.

### (Appendix 5)

A robot control device 10 including: a reading device 40 that reads first identification information associated with information of a three-dimensional shape model of a robot 20 from a first radio tag 22 attached to a robot 20 and one or more second identification information associated with information of a three-dimensional shape model of a corresponding object 30 from one or more second radio tags 32 attached to one or more objects 30 disposed around the robot 20; an analysis unit 101 that analyzes respective positions of the robot 20 and the one or more objects 30 in a real space 80 based on information read from the first identification information and the one or more second identification information by the reading device 40; and a simulation unit 102 that simulates an operation of the robot 20 while disposing three-dimensional shape models of the robot 20 and the one or more objects 30 in a virtual space based on information indicating the respective positions of the robot 20 and the one or more objects 30 in the real space 80 and analyzed by the analysis unit 101, information of the three-dimensional shape model of the robot 20 associated with the first identification information, and information of the three-dimensional shape models of the respective one or more objects 30 respectively associated with the one or more second identification information.

### (Appendix 6)

The robot control device 10 according to Appendix 5, further including: a display unit 106 that displays the three-dimensional shape model of the robot 20 and the three-dimensional shape models of the one or more objects 30 disposed in the virtual space; and a correction unit 103 that corrects a scale of the three-dimensional shape model of the robot 20 or the three-dimensional shape models of the respective one or more objects 30 in response to a correction instruction from an operator.

### (Appendix 7)

The robot control device 10 according to Appendix 5 or 6, in which one of augmented reality goggles 60, mixed reality goggles 60, and virtual reality goggles 60 wirelessly connected to the robot control device 101 serves as the display unit 106.

### (Appendix 8)

The robot control device 10 according to any one of Appendixes 5 to 7, further including: a control unit 104 that controls the operation of the robot 20 such that the robot 20 performs a predefined operation in response to designation of the second radio tags 32 from the operator.

### (Appendix 9)

A simulation method that causes a computer system to execute: Step 501 of reading a first marker 21 attached to a robot 20 and associated with information of a three-dimensional shape model of the robot 20 and one or more second markers 31 attached to one or more objects 30 disposed around the robot 20, each of the one or more second markers 31 being associated with information of a three-dimensional shape model of a corresponding object 30; Step 502 of performing image analysis concerning respective positions of the robot 20 and the one or more objects 30 in a real space 80 based on information read from the first marker 21 and the one or more second markers 31; and Step 503 of simulating an operation of the robot 20 while disposing the respective three-dimensional shape models of the robot 20 and the one or more objects 30 in a virtual space based on information indicating the respective positions of the robot 20 and the one or more objects 30 in the real space 80, information of the three-dimensional shape model of the robot 20 associated with the first marker 21, and information of the three-dimensional shape models of the respective one or more objects 30 respectively associated with the one or more second markers 31.

### (Appendix 10)

A simulation method that causes a computer system to execute: Step 701 of reading first identification information associated with information of a three-dimensional shape model of a robot 20 from a first radio tag 22 attached to a robot 20 and one or more second identification information associated with information of a three-dimensional shape model of a corresponding object 30 from one or more second radio tags 32 attached to one or more objects 30 disposed around the robot 20; Step 702 of analyzing respective positions of the robot 20 and the one or more objects 30 in a real space based on information read from the first identification information and the one or more second identification information; and Step 703 of simulating an operation of the robot 20 while disposing the respective three-dimensional shape models of the robot 20 and the one or more objects 30 in a virtual space 80 based on information indicating the respective positions of the robot 20 and the one or more objects 30 in the real space 80, information of the three-dimensional shape model of the robot 20 associated with the first identification information, and information of the three-dimensional shape models of the one or more objects 30 respectively associated with the one or more second identification information.

### (Appendix 11)

A simulation program 121 that causes a computer system to execute: Step 501 of reading a first marker 21 attached to a robot 20 and associated with information of a three-dimensional shape model of the robot 20 and one or more second markers 31 attached to one or more objects 30 disposed around the robot 20, each of the one or more second markers 31 being associated with information of a three-dimensional shape model of a corresponding object 30; Step 502 of performing image analysis concerning respective positions of the robot 20 and the one or more objects 30 in a real space 80 based on information read from the first marker 21 and the one or more second markers 31; and Step 503 of simulating an operation of the robot 20 while disposing the respective three-dimensional shape models of the robot 20 and the one or more objects 30 in a virtual space based on information indicating the respective positions of the robot 20 and the one or more objects 30 in the real space 80, information of the three-dimensional shape model of the robot 20 associated with the first marker 21, and information of the three-dimensional shape models of the respective one or more objects 30 respectively associated with the one or more second markers 31.

### (Appendix 12)

A simulation program 121 that causes a computer system to execute: Step 701 of reading first identification information associated with information of a three-dimensional shape model of a robot 20 from a first radio tag 22 attached to a robot 20 and one or more second identification information associated with information of a three-dimensional shape model of a corresponding object 30 from one or more second radio tags 32 attached to one or more objects 30 disposed around the robot 20; Step 702 of analyzing respective positions of the robot 20 and the one or more objects 30 in a real space based on information read from the first identification information and the one or more second identification information; and Step 703 of simulating an operation of the robot 20 while disposing the respective three-dimensional shape models of the robot 20 and the one or more objects 30 in a virtual space 80 based on information indicating the respective positions of the robot 20 and the one or more objects 30 in the real space 80, information of the three-dimensional shape model of the robot 20 associated with the first identification information, and information of the three-dimensional shape models of the one or more objects 30 respectively associated with the one or more second identification information.

### [Reference Signs List]

10 Robot control device
11 Computing device
12 Storage device
13 Input/output interface
14 Display device
15 Input device
20 Robot
21 Marker
22 Radio tag
30 Object
31 Marker
32 Radio tag
40 Reading device
50 Mobile terminal
60 Goggles
80 Real space
101 Analysis unit
102 Simulation unit
103 Correction unit
104 Control unit
105 Storage unit
106 Display unit
107 Operation unit
121 Simulation program
122 Robot control program
123 Operating system
124 Model information

## Claims

1. A robot control device comprising:
a reading device that reads a first marker attached to a robot and associated with information of a three-dimensional shape model of the robot and one or more second markers attached to one or more objects disposed around the robot, wherein each of the one or more second markers is associated with information of a three-dimensional shape model of a corresponding object;
an analysis unit that performs image analysis concerning respective positions of the robot and the one or more objects in a real space based on information read from the first marker and the one or more second markers by the reading device; and
a simulation unit that simulates an operation of the robot while disposing the respective three-dimensional shape models of the robot and the one or more objects in a virtual space based on information indicating the respective positions of the robot and the one or more objects in the real space and analyzed by the analysis unit, information of the three-dimensional shape model of the robot associated with the first marker, and information of the three-dimensional shape models of the respective one or more objects respectively associated with the one or more second markers.

2. The robot control device according to claim 1, further comprising:
a display unit that displays the three-dimensional shape model of the robot and the three-dimensional shape models of the respective one or more objects disposed in the virtual space; and
a correction unit that corrects a scale of the three-dimensional shape model of the robot or the three-dimensional shape models of the respective one or more objects in response to a correction instruction from an operator.

3. The robot control device according to claim 2, wherein one of augmented reality goggles, mixed reality goggles, and virtual reality goggles wirelessly connected to the robot control device serves as the display unit.

4. The robot control device according to any one of claims 1 to 3, further comprising:
a control unit that controls the operation of the robot such that the robot performs a predefined operation in response to designation of the second markers from the operator.

5. A robot control device comprising:
a reading device that reads first identification information associated with information of a three-dimensional shape model of a robot from a first radio tag attached to the robot and one or more second identification information associated with information of a three-dimensional shape model of a corresponding object from one or more second radio tags attached to one or more objects disposed around the robot;
an analysis unit that analyzes respective positions of the robot and the one or more objects in a real space based on information read from the first identification information and the one or more second identification information by the reading device; and
a simulation unit that simulates an operation of the robot while disposing the respective three-dimensional shape models of the robot and the one or more objects in a virtual space based on information indicating the respective positions of the robot and the one or more objects in the real space and analyzed by the analysis unit, information of the three-dimensional shape model of the robot associated with the first identification information, and information of the three-dimensional shape models of the respective one or more objects respectively associated with the one or more second identification information.

6. The robot control device according to claim 5, further comprising:
a display unit that displays the three-dimensional shape model of the robot and the three-dimensional shape models of the respective one or more objects disposed in the virtual space; and
a correction unit that corrects a scale of the three-dimensional shape model of the robot or the three-dimensional shape models of the respective one or more objects in response to a correction instruction from an operator.

7. The robot control device according to claim 6, wherein one of augmented reality goggles, mixed reality goggles, and virtual reality goggles wirelessly connected to the robot control device serves as the display unit.

8. The robot control device according to any one of claims 5 to 7, further comprising:
a control unit that controls the operation of the robot such that the robot performs a predefined operation in response to designation of the second radio tags from the operator.

9. A simulation method that causes a computer system to execute:
reading a first marker attached to a robot and associated with information of a three-dimensional shape model of the robot and one or more second markers attached to one or more objects disposed around the robot, wherein each of the one or more second markers is associated with information of a three-dimensional shape model of a corresponding object;
performing image analysis concerning respective positions of the robot and the one or more objects in a real space based on information read from the first marker and the one or more second markers; and
simulating an operation of the robot while disposing the respective three-dimensional shape models of the robot and the one or more objects in a virtual space based on information indicating the respective positions of the robot and the one or more objects in the real space, information of the three-dimensional shape model of the robot associated with the first marker, and information of the three-dimensional shape models of the respective one or more objects respectively associated with the one or more second markers.

10. A simulation method that causes a computer system to execute:
reading first identification information associated with information of a three-dimensional shape model of a robot from a first radio tag attached to the robot and one or more second identification information associated with information of a three-dimensional shape model of a corresponding object from one or more second radio tags attached to one or more objects disposed around the robot;
analyzing respective positions of the robot and the one or more objects in a real space based on information read from the first identification information and the one or more second identification information; and
simulating an operation of the robot while disposing the respective three-dimensional shape models of the robot and the one or more objects in a virtual space based on information indicating the respective positions of the robot and the one or more objects in the real space, information of the three-dimensional shape model of the robot associated with the first identification information, and information of the three-dimensional shape models of the respective one or more objects respectively associated with the one or more second identification information.

11. A simulation program that causes a computer system to execute:
reading a first marker attached to a robot and associated with information of a three-dimensional shape model of the robot and one or more second markers attached to one or more objects disposed around the robot, wherein each of the one or more second markers is associated with information of a three-dimensional shape model of a corresponding object;
performing image analysis concerning respective positions of the robot and the one or more objects in a real space based on information read from the first marker and the one or more second markers; and
simulating an operation of the robot while disposing the respective three-dimensional shape models of the robot and the one or more objects in a virtual space based on information indicating the respective positions of the robot and the one or more objects in the real space, information of the three-dimensional shape model of the robot associated with the first marker, and information of the three-dimensional shape models of the respective one or more objects respectively associated with the one or more second markers.

12. A simulation program that causes a computer system to execute:
reading first identification information associated with information of a three-dimensional shape model of a robot from a first radio tag attached to the robot and one or more second identification information associated with information of a three-dimensional shape model of a corresponding object from one or more second radio tags attached to one or more objects disposed around the robot;
analyzing respective positions of the robot and the one or more objects in a real space based on information read from the first identification information and the one or more second identification information; and
simulating an operation of the robot while disposing the respective three-dimensional shape models of the robot and the one or more objects in a virtual space based on information indicating the respective positions of the robot and the one or more objects in the real space, information of the three-dimensional shape model of the robot associated with the first identification information, and information of the three-dimensional shape models of the one or more objects respectively associated with the one or more second identification information.
